# EUROPEAN PATENT APPLICATION

(11) **EP 4 403 901 A1**
(43) Date of publication of application: **24.07.2024**
(21) Application number: 23382034.9
(22) Date of filing: 17.01.2023
(51) Int. Cl.: G01N 21/552

(54) **A TWO-STEP METHOD FOR MANUFACTURING PLASMONIC NANOSTRUCTURES FOR PLASMONIC BIOSENSING**

(71) Applicant: Fundacio Institut de Bioenginyeria de Catalunya, 08028 Barcelona (ES); Institució Catalana de Recerca I Estudis Avançats, 08010 Barcelona (ES); Akademia Gorniczo-Hutnicza im. Stanislawa Staszica w Krakowie, 30-059 Krakow (PL)
(72) Inventor: LÓPEZ MUÑOZ, Gerardo Arturo, 08028 Barcelona (ES); RYDOSZ, Artur, 30-059 Krakow (PL); RAMÓN AZCÓN, Javier, 08028 Barcelona (ES)
(74) Representative: Hoffmann Eitle

(57) **Abstract**

The present invention relates generally to the field of biosensors, and in particular the present invention provides a two-step method that can be applied to any 1-2D nanocrystal template for metaplasmonic biosensing in order to enhance the surface sensitivity for biorecognition events below 100 nm, preferably between 10 to 15 nm.

## Description

### Technical field of the invention

The present invention relates generally to the field of biosensors, and in particular the present invention provides a two-step method that can be applied to any 1-2D nanocrystal template for metaplasmonic biosensing in order to enhance the surface sensitivity for biorecognition events below 50 nm, preferably between 10 to 15 nm.

### Background art

The global biosensors market was valued at USD 22.4 billion in 2020 and is expected to expand at a compound annual growth rate (CAGR) of 7.9% from 2021 to 2028. The optical segment is expected to witness the highest CAGR of 8.6% from 2021 to 2028 (grandviewresearch.com). Among different biosensing technologies, optical biosensors based on plasmonic phenomena at the nanoscale have been the focus of extensive research and development over the last years due to their improved surface sensitivity, well-known biofunctionalization strategies, and their potential for direct, label-free, and multiplexed biodetection in real-time for the development of the Point-of-Care device. However, the main challenges in nanoplasmonic biosensors are high-throughput fabrication processes for large-scale production and effective optimization of the evanescent decay length for enhanced surface sensitivity according to the biorecognition event (i.e., protein/antibody, exosome/antibody, etc.). The last is scarcely reported in the literature (López-Muñoz, 2017 and 2021).

Different strategies have been proposed to enhance the surface sensitivity of nanoplasmonic biosensors for low dimension biorecognition events. The first strategy implies using colloidal nanoparticles either immobilized in the sensor surface (SpaCkova, 2019) to improve the surface sensitivity by reducing the evanescent decay length or colloidal nanoparticles decorated with a secondary antibody (Belushkin, 2020) to form a "sandwich" assay and amplify the biosensing signal. The first strategy intricates the fabrication process with limited reproducibility batch-to-batch; meanwhile, the second strategy increases the cost of the bioassay and is an indirect biosensing assay. The last approach is related to nanoporous gold, which has significantly enhanced biosensing performance and surface sensitivity up to one order of magnitude (Garoli, 2019).

However, the fabrication process usually implies chemical etching steps requiring precise control for reproducibility in laboratory conditions.

In the present invention, we herein provide a high-throughput technology with remarkable potential for massive production of direct, label-free, and multiplexed biosensors with superior surface sensitivity for thin biolayers below 50 nm (i.e., protein/antibody biorecognition events have a biolayer thickness between 10 to 15 nm).

### Brief description of the figures

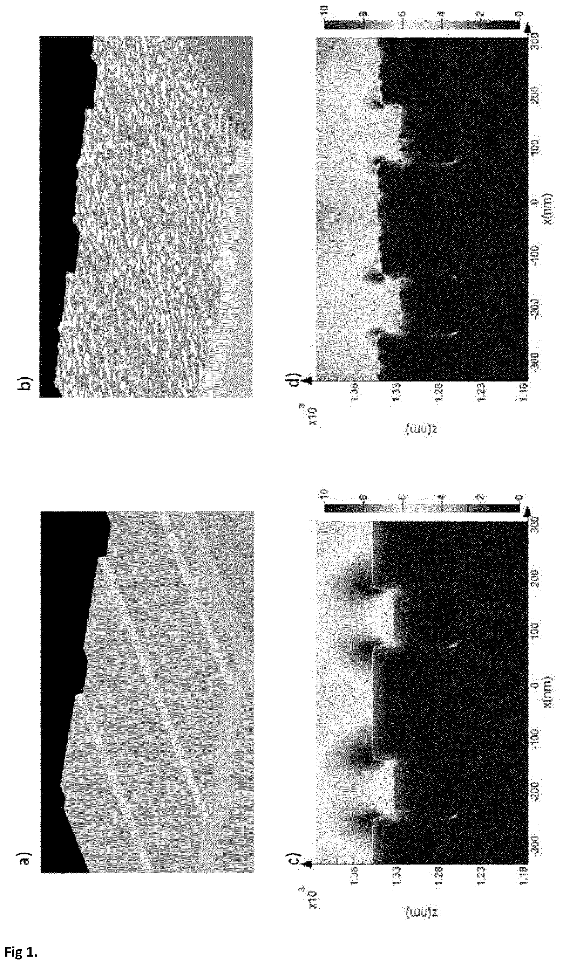

**Figure 1****. FDTD Model and electric field distributions,** a) Morphological model of a nanotemplate covered by a 70 nm flat gold film and b) for a 60 nm flat gold film plus a 10 nm height gold nanoroughness layer. Simulated electric field distribution for the c) 70 nm flat gold film and d) for the 60 nm flat gold film plus a 10 nm height gold nanoroughness layer.

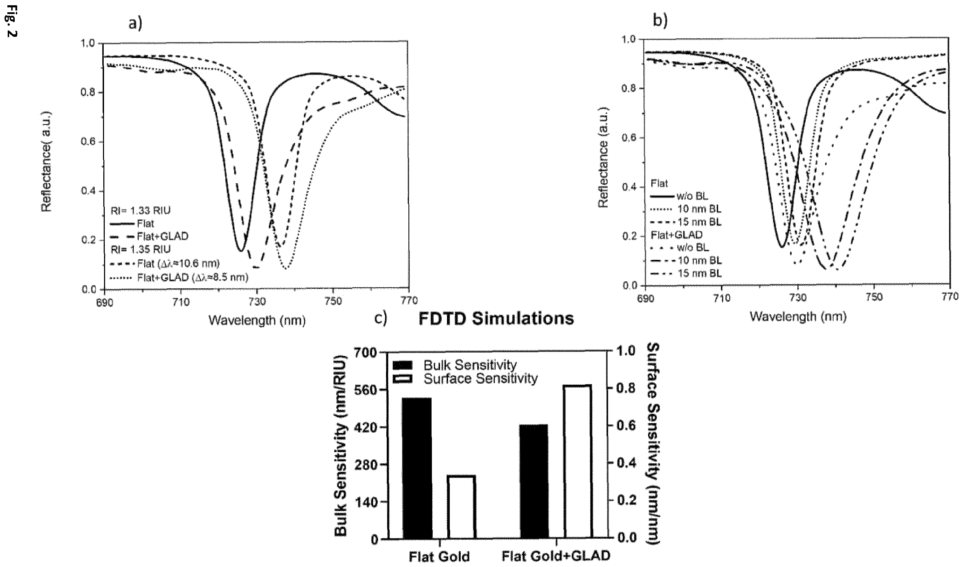

**Figure 2****. FDTD Results of bulk and surface sensitivity,** a) Plasmonic band displacement under a high media refractive index change (Δn= 0.2 RIU) for the flat (70 nm Au film) and the Flat+GLAD (60 nm flat Au film + 10 nm Au nanoroughness height layer). b) Plasmonic band displacement for a 10 and 15 nm biolayers (n= 1.45 RIU) to mimic the interaction of low and high molecular proteins in a protein/antibody biorecognition event. c) FDTD simulation results for bulk and surface sensitivity with a decrease in the first one and an enhancement above to 2.5-fold in the surface sensitivity and as consequence, in the biosensing performance for protein/antibody biorecognition events up to 15 nm height.

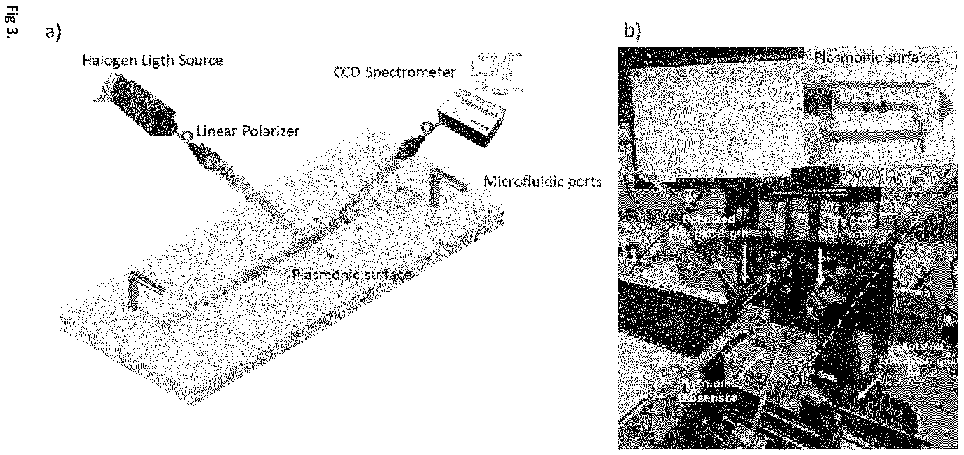

**Figure 3****. Experimental Set-up.** a) Graphical representation of the experimental optical set-up b) Photography of the experimental optical set-up, the insert shows an integrated plasmonic sensor with two sensing regions.

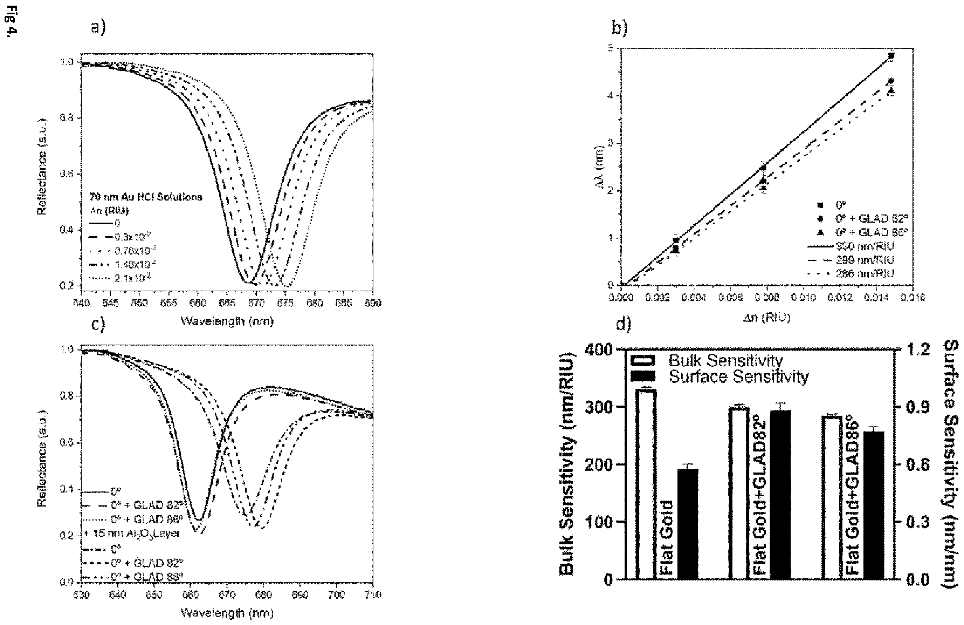

**Figure 4****. Bulk and surface sensitivity with and without nanoroughness under two different GLAD angle depositions,** a) Plasmonic band displacement under different refractive index conditions for the Flat+GLAD (60 nm flat Au film + 5 nm height Au nanoroughness) sensor. b) Bulk sensitivity estimation for the 70 nm flat control (0°) and the 60 nm + 5 nm nanoroughness with a GLAD angle of 82° and 86°. c) Plasmonic band displacement after the deposition of a 15 nm aluminium oxide layer (n= 1.45 RIU) to mimic the maximum estimated height of an antigen/antibody biorecognition event considering a height of around 6-7 nm for the antibody and a diameter up to 6-8 nm for the target protein, d) Experimental result for bulk and surface sensitivity with a decrease in the first one and an enhancement close to 1.5-fold in the surface sensitivity and, as a consequence, in the biosensing performance for protein/antibody biorecognition events up to 15 nm height.

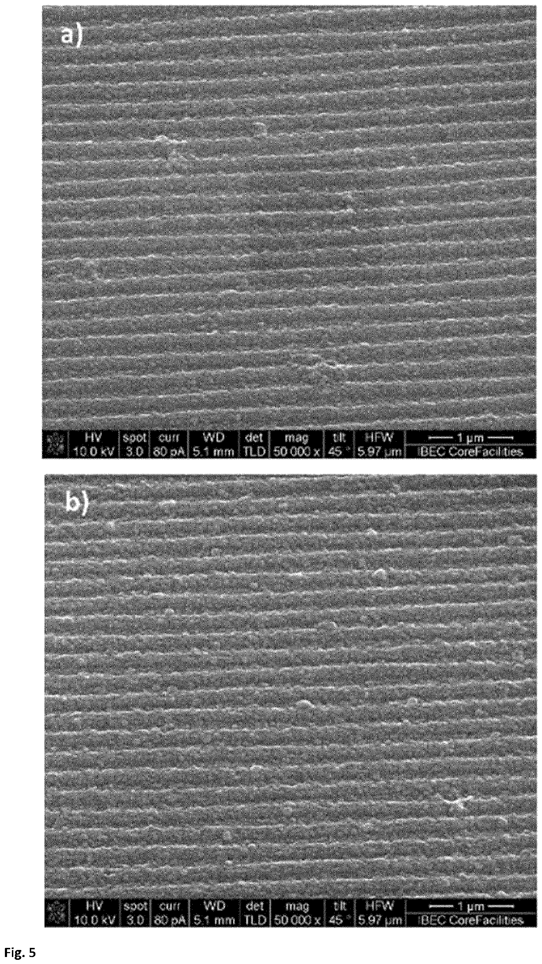

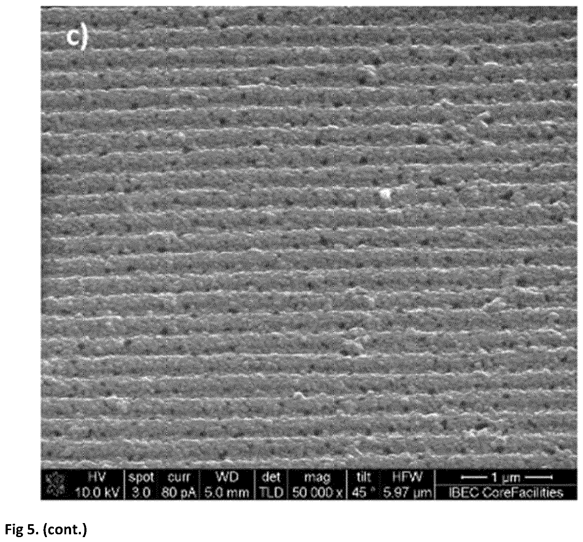

**Figure 5****. SEM images of the different deposition conditions.** a) Control (flat 70 nm Au), b) 60 nm flat + 5 nm Au nanoroughness 82°and c) 60 nm flat + 5 nm height Au nanoroughness 86°. It is visible the higher roughness for the 82° vs. the control surface, the 86° shows lower roughness vs. the 82° condition with a remarkable shadowing effect.

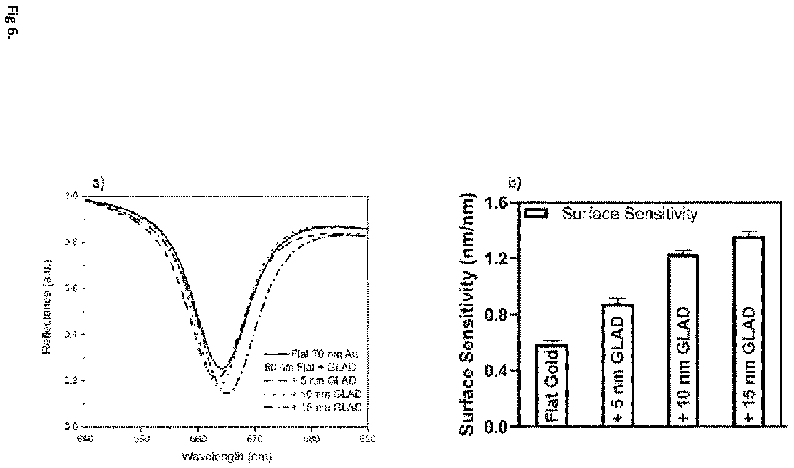

**Figure 6****. Experimental results with different height nanoroughness GLAD layer.** a) Plasmonic response of metasurfaces with a 70 flat Au film (control) and fixed 60 nm flat Au film + different nanoroughness height layers between 5 to 15 nm under a 82° GLAD deposition angle. b) Surface sensitivity increase with different nanoroughness GLAD height layers after a 15 nm alumina deposition to mimic a biolayer with a maximum biosensing improvement up to 2.3-fold for the 15 nm height nanoroughness.

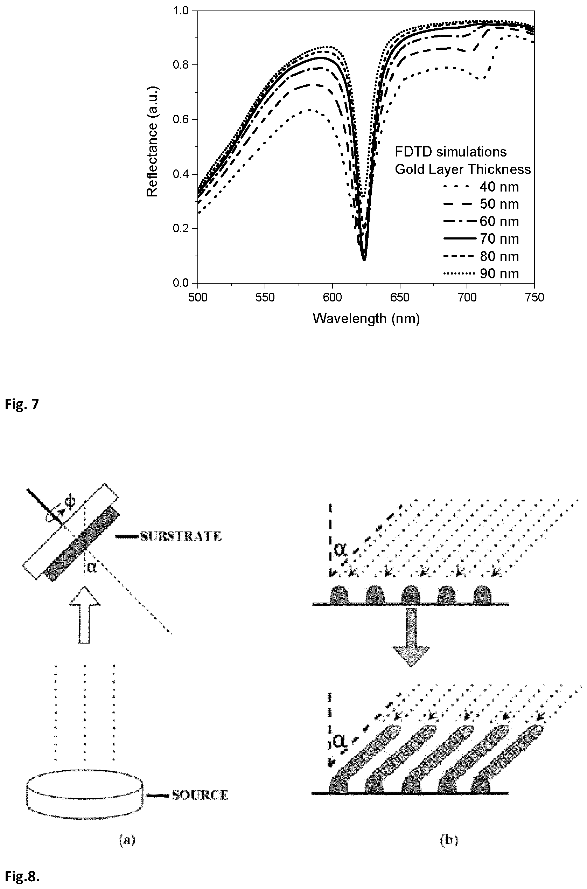

**Figure 7****. FDTD Simulation Results of optimal gold layer thickness estimation.** The different simulated reflectance spectra for a Blu-Ray disc-based 1D nanocrystal coated with different gold layer thicknesses. The figure shows that the optimal gold layer thickness is achieved at 70 nm with the minimum reflectance value closest to 0 a.u.
**Figure 8****.** Scheme of the GLAD technique: (a) drawing of main process; (b) film deposition process on the substrate with shadowing effect. [Sensors 2022, 22, 651. https://doi.org/10.3390/s220206511

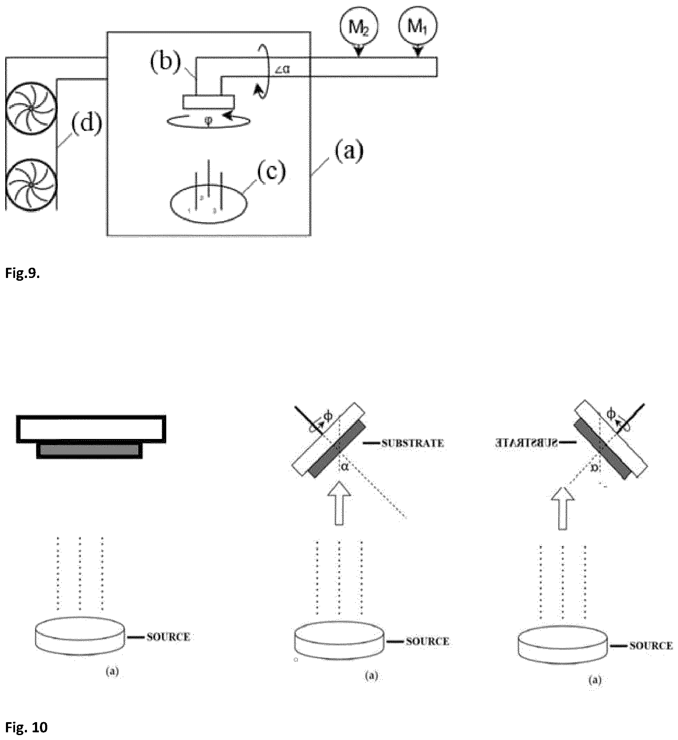

**Figure 9****.** Scheme of GLAD machine, where (a) deposition chamber, (b) GLAD manipulator, (c) magnetrons with metalic targets, (d) vacuum pumps, M1 DC motor that provides rotation (φ), M2 stepper that provides angle change (α). [Sensors 2022, 22, 651. https://doi.org/10.3390/s220206511
**Figure 10****.** This figure shows the evaporation flux at different angles. At the left image evaporation flux is shown at a normal incidence. The right image shows an evaporation flux at an incidence angle alpha or -alpha

### Description of embodiments

### Definitions

- As used herein "FDTD" shall be understood as Finite-Difference Time-Domain method used to solve Maxwell's equations in modeled nano-scale optical devices.
- As used herein "plasmonic band" shall be understood as the wavelength range or region in which the metallic nanomaterial absorbs light.
- As used herein "metaplasmonic" shall be understood as a plasmonic effect based on highly ordered and quasi-ordered metallic nanostructures.
- As used herein "metaplasmonic biosensing" shall be understood as biosensing based on highly and quasi-ordered metallic nanostructures.
- As used herein "nanocrystal" shall be understood as a crystalline structure with at least one dimension measuring less than 100 nanometers.
- As used herein "minimum reflectivity value" shall be understood as the reflectance value closest to 0 in a reflectance spectra which refers to the maximum absorption of light of the material.
- As used herein "nanoroughness" shall be understood as an uneven or irregular surface with at least one dimension measuring less than 100 nanometers.
- As used herein "GLAD" shall be understood as Glancing angle deposition, a variation of oblique angle deposition with two axes rotation.
- As used herein "evaporation flux" shall be understood as the magnitude and direction of the vaporization of the material.
- As used herein "plasmonic nanostructure" shall be understood as a noble metal-based structure with at least one dimension measuring less than 100 nanometers.
- As used herein "normal incidence of evaporation flux" shall be understood as a perpendicular incidence between the substrate in which the material will be deposited and the direction of the vaporization of the material.
- As used herein "biorecognition event" shall be understood as the biochemical interaction between a bioreceptor, i.e., an antibody, and the target, i.e., a protein with specific affinity to the selected antibody.
- As used herein "optimal plasmonic coupling" shall be understood as the condition in which is achieved the minimum reflectivity value closest to a value of 0 a.u. in the plasmonic band (the highest absorption is achieved). It involves the optimal metallic layer thickness to achieve the minimum reflectivity value on the plasmonic band (the highest absorption is achieved). As shown in figure 7, the optimal thickness for gold is 70 nm; below and above, the plasmonic coupling is not the optimal.

### Detailed description of the invention

The present invention provides a two-step method that can be applied to any 1-2D nanocrystal template for metaplasmonic biosensing in order to enhance the surface sensitivity for biorecognition events below 100 nm, preferably below 50 nm, more preferably between 10 to 15 nm that correspond to a typical protein/antibody biorecognition event (height of around 6-7 nm for the antibody and a diameter up to 6-8 nm for the target protein) by generating metallic nanoparticles on the surface of the metallic layer. FDTD optical simulations were performed based on the model of Blu-Ray discs 1-D nanocrystal template coated with a 70 nm Au layer which corresponds to the optimal thickness layer to achieve the minimum reflectivity value in the plasmonic band, and a 1-D nanocrystal template coated in the first step with a 60 nm Au layer (a value below the optimal thickness to achieve the minimum reflectivity value in the plasmonic band) and later with a 10 nm heigh random nanoroughness layer **(****Figure 1****).** Optical simulations demonstrate that this extra layer localizes the electromagnetic field near the surface and decreases the evanescent field decay length creating the optimal environment for biosensing of thin biolayers **(****Figure 1d** **and** **Figure 2a****)** in comparison to a flat Au layer. Secondly, this extra layer not only enhances the surface sensitivity of the sensor nearly 2.5-fold when a 10 and 15 nm biolayer is simulated **(****Figure 2b** **and c)** but also the addition of this nanoroughness increases the optical absorption (or the minimum reflectivity value in the plasmonic band) due to an increase in scattering phenomena by the nanoroughness, in other words, this nanoroughness promotes a higher energy transfer between the metaplasmonic substrate and the light by light scattering (evident with a wider and deeper plasmonic band).

Experimentally 1-D plasmonic nanostructures were optically characterized using the experimental setup in **Figure 3****.** As a first step, the angle deposition was evaluated (GLAD technique is illustrated in Figure 8). Three conditions were tested, 70 nm Au flat layer with a GLAD angle of 0° (control), 60 nm Au layer at 0°+ 5 nm height nanoroughness layer at 82°, and 60 nm Au layer at 0°+ 5 nm height nanoroughness layer at 86° (with the utilization of deposition system illustrated in Figure 9). **Figure 4b** shows a decrease in the bulk sensitivity of the plasmonic metasurfaces with the addition of the nanoroughness layer in both angle conditions. These results are in good agreement with the theoretical results. Later, the plasmonic metasurfaces were coated with a 15 nm alumina layer by electron beam evaporation to mimic a biolayer, and the plasmonic band displacement was measured. As shown in **Figure 4c** and summarized in **Figure 4d****,** the nanoroughness layer increased the biosensing performance up to 1.5-fold, demonstrating that the presence of this second nanoroughness layer has a deep influence on the biosensing performance. As can be observed in **Figure 5****,** it is a clear increase in the roughness of the metasurfaces after the extra GLAD layer, and it is more pronounced in the 82° than the 86°as consequence of a higher shadowing effect for higher GLAD incident angles.

Finally, different heigh nanoroughness layers were evaluated: 60 nm flat layer GLAD 0°+ 5 nm GLAD 82°, 60 nm flat layer GLAD 0°+ 10 nm GLAD 82°, 60 nm flat layer GLAD 0°+ 15 nm GLAD 82°. As can be observed in **Figure 6****,** there is a decrease in the minimum reflectivity value with the nanoroughness layer height and an increase in the surface sensitivity with the height, being observed up to 2.3-fold enhancement for the +15 nm GLAD 82° condition.

Up to 2.3/2.5-fold enhancement in biosensing performance could be achieved with this method in comparison with flat 1-2D plasmonic metasurfaces. In fact, the addition of this new GLAD layer enhances the surface sensitivity, the plasmonic coupling, and in consequence, the biosensing performance by the generation of gold nanoparticles/nanoroughness over the gold layer surface. Finally, the presence of these gold nanoparticles/nanoroughness under the appropriate plasmonic coupling conditions enhance the surface sensitivity by an increased number of "hot spots" and plasmonic coupling of any 1-2D periodic plasmonic nanostructures (i.e., nanoholes, nanograting, nanopillars, etc...). The increasing number of hot spots localizes the evanescent field decay length and, as a consequence, makes it suitable for the detection of low-dimension biomarkers (i.e., insulin), which are highly challenging to detect using conventional plasmonic sensors.

Therefore, a first aspect of the invention refers to a plasmonic nanostructure biosensor comprising a substrate and a metal film disposed on the substrate, wherein said metal film is disposed on the substrate under two deposition conditions: one first layer is deposited with a thickness below the optimal plasmonic coupling and a second layer is deposited using oblique angle deposition at a fixed deposition angle.

Preferably, the first layer is deposited under an evaporation flux, preferably deposited under an evaporation flux in an angle of incidence between about 0º and about 180º, preferably between 45º and 135º, preferably between 70º and 110º, preferably between 80º and 100º, more preferably between 85º and 95º, even more preferably under the normal incidence of evaporation flux. Please refer to figure 10.

In a preferred embodiment of the first aspect of the invention, the substrate comprises or is made of silicon, silicon dioxide, silicon nitride, glass, diamond, quartz, magnesium fluoride (MgF2), calcium fluoride (CaF2), ZnSe, germanium, or a polymer. Preferably, the substrate is a crystal or a nanocrystal, more preferably a 1-2D nanocrystal template (i.e., Blu-Ray discs 1-D nanocrystals).

In another preferred embodiment of the first aspect of the invention, the metal is a noble metal, a transition metal, or an alkali metal. Much preferably, the metal comprises or is gold. It is, anyhow, noted that the metals used in the nanoplasmonic structures described herein, are selected on the basis of their surface plasmon properties when an incident light source illuminates their surface. The metal used can be thus a noble metal, or any metal selected from the group consisting of gold, rhodium, palladium, silver, osmium, iridium, platinum, titanium, and aluminum.

It is further noted that, in the context of the present invention, and preferably when gold is used as the metal, a thickness below the optimal plasmonic coupling under the normal incidence of evaporation flux is understood as less than 70 nm. Therefore, in another preferred embodiment of the first aspect of the invention, the metal is preferably gold, the first layer has a thickness of less than 70 nm, the thickness of the second layer is in the range of from 1 to 40 nm, and the total thickness of the first and second layers is in the range of from 65 nm to 100 nm, preferably from 65 nm to 80 nm, more preferably about 70 nm.

In another preferred embodiment of the first aspect of the invention, the metal is preferably gold, the first layer has a thickness of from 40 to 65nm, preferably from 50 nm to 65 nm, more preferably about 60 nm, the thickness of the second layer is in the range of from 1 to 30 nm, preferably from 1 to 20 nm, more preferably from 1 to 15 nm, and the total thickness of the first and second layers is in the range of from 65 nm to 100 nm, preferably from 65 nm to 80 nm, more preferably about 70 nm.

In another preferred embodiment of the first aspect of the invention, the metal disposed on the substrate is gold, the first layer has a thickness of from 40 to 65nm, preferably from 50 nm to 65 nm, more preferably about 60 nm, the thickness of the second layer is in the range of from 1 to 30 nm, preferably from 1 to 20 nm, more preferably from 1 to 15 nm, and the total thickness of the first and second layers is in the range of from 65 nm to 80 nm, more preferably about 70 nm.

In another preferred embodiment of the first aspect of the invention, said metal film is further characterized by comprising a plurality of nanoelements, such as capture agents, arranged in a predefined pattern on top of the metal film, wherein each of said nanoelements has a dimension of less than 100 nm, preferably less than 50 nm, preferably between 1 to 15 nm, more preferably between 5 and 10 nm.

The nanoelements can be arranged in any pattern that gives rise to a desired optical property for the nanoplasmonic biosensor, including both periodic patterns and non-periodic patterns, such as pseudo-random and random patterns. Accordingly, in some embodiments of this aspect, the pattern of nanoelements is a periodic pattern. In some embodiments of this aspect, the pattern of nanoelements is a non-periodic pattern, such as a pseudo-random pattern or a random pattern.

It is also desirable, in some embodiments, to activate a surface of the metal of the nanoplasmonic structure using an activating agent. As used herein, "activating" the surface of the metal refers to treating it with an activating agent in order to allow, permit or enhance the binding of a nanoelement such as a capture agent. The activating agent can be chosen on the basis of the nature of the nanoelement used with the nanoplasmonic structure, for example, whether the nanoelement is a protein or a nucleic acid. Accordingly, in some embodiments, when the nanoelement is a protein, the activating agent used to activate a metal surface is a piranha solution. Therefore, the metallic surface of the plasmonic nanostructure can be functionalized using one or more specific capture agents. As used herein, "functionalization" refers to adding to the surface of the metal of a plasmonic nanostructure according to the invention one or more specific nanoelements. In some embodiments, the metallic surface is first activated, then functionalized. In other embodiments, functionalization of a metallic surface can be performed in the absence of activation.

The nanoelement such as a capture agent used to functionalize a nanoplasmonic nanostructure according to the present invention should have specific binding properties for one or more biomolecular targets. As used herein, a "capture agent" refers to any of a variety of specific binding molecules, including, but not limited to, a DNA oligonucleotide, an RNA oligonucleotide, a peptide, a protein (e.g., transcription factor, antibody or antibody fragment thereof, receptor, a recombinant fusion protein, or enzyme), a small organic molecule, or any combination thereof, that can be immobilized onto the surface of the plasmonic nanostructures described herein. In some embodiments, the capture agent is immobilized in a periodic fashion. For example, one or more specific immobilized capture agents can be arranged in an array at one or more distinct locations on the surface of the plasmonic nanostructure. In some such embodiments, capture agents specific for different biomolecular targets are immobilized at such distinct locations on the surface of a plasmonic structure, such that the structure can be used to detect multiple biomolecular targets in a sample. In other embodiments, the capture agent is immobilized in a non-periodic or random fashion.

Such functionalized biosensors are useful for the detection of biomolecular interactions, including, but not limited to, DNA-DNA, DNA-RNA, DNA-protein, RNA-RNA, RNA-protein, and protein-protein interactions. For example, a plasmonic nanostructure having a plurality of DNA oligonucleotides immobilized on the surface can be used to detect the presence of a protein, such as a transcription factor, present in a sample contacted with the substrate layer, that binds to one or more of the oligonucleotides.

Thus, in some embodiments, the metallic surface of the plasmonic nanostructure described herein is functionalized with a capture agent comprising one or more of a plurality of immobilized DNA oligonucleotides. In some embodiments, the metallic surface of a plasmonic nanostructure described herein is functionalized with a capture agent comprising one or more of a plurality of immobilized RNA oligonucleotides. In some embodiments, the metallic surface of a plasmonic nanostructure described herein is functionalized with a capture agent comprising one or more of a plurality of immobilized peptides. In some embodiments, the metallic surface of a plasmonic nanostructure described herein is functionalized with a capture agent comprising one or more of a plurality of immobilized proteins. In some such embodiments, the protein is an antigen. In other such embodiments, the protein is a polyclonal antibody, monoclonal antibody, single chain antibody (scFv), F(ab) fragment, F(ab')2 fragment, or an Fv fragment. In other such embodiment, the protein is an enzyme, a transcription factor, a receptor, or a recombinant fusion protein.

A second aspect of the invention refers to a method for manufacturing a plasmonic nanostructure biosensor, wherein the plasmonic nanostructure comprises a substrate and a metal film disposed on the substrate, and wherein the method comprises disposing the metal film on the substrate under two deposition conditions:
i. one first layer of the metal film is deposited on the substrate with a thickness below the optimal plasmonic coupling; and
ii. a second layer is deposited using oblique angle deposition at a fixed deposition angle.

Preferably, the first layer is deposited under an evaporation flux, preferably deposited under an evaporation flux in an angle of incidence between 70º and 110º, preferably between 80º and 100º, more preferably between 85º and 95º, even more preferably under the normal incidence of evaporation flux.

In a preferred embodiment of the second aspect of the invention, the substrate comprises or is made of silicon, silicon dioxide, silicon nitride, glass, diamond, quartz, magnesium fluoride (MgF2), calcium fluoride (CaF2), ZnSe, germanium, or a polymer, preferably the substrate is a crystal or a nanocrystal.

In another preferred embodiment of the second aspect of the invention, the metal film comprises or is made of a noble metal, a transition metal, or an alkali metal, or any combination thereof, wherein preferably the metal is gold.

In another preferred embodiment of the second aspect of the invention, the substrate is a 1-2D nanocrystal template (i.e., Blu-Ray discs 1-D nanocrystals).

In another preferred embodiment of the second aspect of the invention, the second layer is deposited using Glancing Angle Deposition.

In another preferred embodiment of the second aspect of the invention, the metal disposed on the substrate is gold, the first layer is deposited to obtain a thickness of less than 70 nm and the second layer is deposited to obtain a thickness in the range of from 1 to 40 nm. Preferably, the metal disposed on the substrate is gold, the first layer is deposited to obtain a thickness of from 40 to 65nm, preferably from 50 nm to 65 nm, more preferably about 60 nm, and the second layer is deposited to obtain a thickness in the range of from 1 to 30 nm, preferably from 1 to 20 nm, more preferably from 1 to 15 nm. More preferably, the metal disposed on the substrate is gold, the total thickness of the first and second layers is deposited to obtain a thickness in the range of from 65 nm to 100 nm, preferably from 65 nm to 80 nm. Still more preferably, the total thickness of the first and second layers is about 70 nm.

In another preferred embodiment of the second aspect of the invention, the metal disposed on the substrate is gold, the second layer is deposited using Glancing Angle Deposition, the first layer is deposited to obtain a thickness of from 40 to 65nm, preferably from 50 nm to 65 nm, more preferably about 60 nm, and the second layer is deposited to obtain a thickness in range of from 1 to 30 nm, preferably from 1 to 20 nm, more preferably from 1 to 15 nm, and the total thickness of the first and second layers is in the range of from 65 nm to 80 nm, preferably about 70 nm.

In another preferred embodiment of the second aspect of the invention, the second layer is deposited, preferably by using Glancing Angle Deposition, at a fixed deposition angle of less than 90º, preferably between 70º and 90º, more preferably between 80º and 90º. Preferably, about 82º or about 86º.

In another preferred embodiment of the second aspect of the invention, the metal film is further functionalized to obtain a plurality of nanoelements arranged in a predefined pattern on top of the metal film, wherein each of said nanoelements has a dimension of less than 100 nm, preferably between 1 to 15 nm, more preferably between 5 and 10 nm. It is noted that such nanoelements are preferably capture elements as defined and as specified in the first aspect of the invention.

A third aspect of the invention refers to a plasmonic nanostructure biosensor obtained according to the method of the second aspect of the invention or according to any of its preferred embodiments.

A fourth aspect of the invention refers to the *in vitro* use of the plasmonic nanostructure according to the first aspect of the invention or according to any of its preferred embodiments or the plasmonic nanostructure according to the third aspect of the invention, for detecting one or more biomolecular targets, wherein preferably the biorecognition event is below 100 nm, preferably between 10 to 15 nm.

A fifth aspect of the invention refers to a plasmonic nanostructure biosensor system for detecting one or more biomolecular targets, preferably comprising:
a. a plasmonic nanostructure biosensor comprising a substrate and a metal film disposed on the substrate as defined in the first aspect of the invention or in any of its preferred embodiments or as defined in the third aspect of the invention, wherein said metal film comprises a plurality of nanoelements arranged in a predefined pattern, wherein each of said nanoelements has a dimension of less than 100 nm, preferably between 1 to 15 nm, more preferably between 5 and 10 nm;
b. a device for contacting one or more samples comprising one or more biomolecular targets to the metal film surface(s) of the plasmonic nanostructure biosensor;
c. an incident light source for illuminating a surface of said metal film to produce surface plasmons; and
d. an optical detection system for collecting and measuring light displaced from said illuminated metal film, wherein said displaced light is indicative of surface plasmon resonance on one or more surfaces of said metal film.

In a preferred embodiment of the fifth aspect of the invention, the device for contacting one or more samples comprises a fluidic system.

A sixth aspect of the invention refers to a method for detecting one or more biomolecular targets comprising:
a. providing a plasmonic nanostructure biosensor system comprising:
   iii. a plasmonic nanostructure biosensor comprising a substrate and a metal film disposed on the substrate as defined as defined in the first aspect of the invention or in any of its preferred embodiments or as defined in the third aspect of the invention,, wherein said metal film comprises a plurality of nanoelements arranged in a predefined pattern, wherein each of said nanoelements has a dimension of less than 100 nm, preferably between 1 to 15 nm, more preferably between 5 and 10 nm;
   iv. a device for contacting one or more samples comprising one or more biomolecular targets to the metal film surface(s) of the plasmonic nanostructure biosensor;
   v. an incident light source for illuminating a surface of said metal film to produce said surface plasmons; and
   vi. an optical detection system for collecting and measuring light displaced from said illuminated metal film, wherein said displaced light is indicative of surface plasmon resonance on one or more surfaces of said metal film;
b. contacting one or more samples comprising one or more biomolecular targets to the metal film surface of the plasmonic nanostructure biosensor;
c. illuminating one or more surfaces of the metal film of the plasmonic nanostructure biosensor with the incident light source to produce surface plasmons, before and after the contacting with the one or more samples;
d. collecting and measuring light displaced from the illuminated film with the optical detection system, before and after the contacting with the one or more samples; and
e. detecting the one or more biomolecular targets based on a change or difference in the measurement of the light displaced from the illuminated film before and after the contacting with the one or more samples.

In a preferred embodiment of the sixth aspect of the invention, the biomolecular target is a eukaryotic cell, a eukaryotic cellular component, a prokaryotic cell, a prokaryotic cellular component, a viral particle, a protein, an oligonucleotide, a prion, a toxin, or any combination thereof.

In another preferred embodiment of the sixth aspect of the invention, said collected light comprises light in a transmission mode, in a reflection mode, or a combination thereof.

In another preferred embodiment of the sixth aspect of the invention, the step of measuring displaced light comprises measuring light over a spectral range selected to comprise at least one plasmon band.

In yet another preferred embodiment of the sixth aspect of the invention, the change in the measurement of the displaced light before and after the contacting is a resonance peak shift, a change in a resonance peak intensity, a broadening of a resonance peak, a distortion in the resonance of peak, or a change in refractive index.

The following examples are merely illustrative of the present invention and do not limit the same.

### Examples

### Materials and Methods:

**FDTD Simulations.** 3D FDTD simulations were carried out using commercial software (FDTD solution, Lumerical, Inc., Vancouver, Canada). Structural parameters of the Blu-ray discs utilized in the simulations (i.e., a grating period of 320 nm, grating width of 100 nm, and a height of 20 nm) were as claimed to Atomic Force Microscopy (AFM) images from previous results (López et al., 2018) . Periodic boundary conditions were used on the x and y-axis, and the perfectly matched layers (PML) approach was used on the z-axis, with a uniform mesh size of 2 nm on all axes. The FDTD simulations were carried out in the range from 400 nm to 1000 nm under TM-polarized light with a variable oblique incidence angle of light 40°. The optical constants of the polycarbonate and gold were considered from Sultanova et al., 2009 and Wakaki et al., 2007 , respectively. The refractive index of the biolayer was fixed to n=1.45 RIU, according to previous reports (Xu, 2019).

**Plasmonic Metasurfaces Fabrication.** Single-layer recordable Blu-ray discs (43743, Verbatim, Taiwan) were used after the removal of their protective (thin polycarbonate) and reflective (aluminium) films as 1D nanocrystal templates. Reflective films were removed by cutting the disc in individual plasmonic chips (size 5.6 cm²) and then immersed it in a hydrochloric acid solution (2M HCl) overnight. Polycarbonate substrates were rinsed with deionized water and nitrogen dried. The films were deposited by the utilization of PVD (physical vapor deposition) system with the utilization of GLAD (glancing angle deposition) technique. The magnetron sputtering technique was applied, where a metallic targets of Au was used. The target has 5N (99.9995%) purity, 50 mm diameter and 50W DC-MF (direct current-medium frequency) power supply was used. The base vacuum and operating pressure were 5×10⁻⁶ mbar and 8×10⁻³ mbar, respectively. For the reference sample a 70 nm thick layer of gold was deposited without GLAD, for the other samples a first 60 nm layer without GLAD was deposited and after, a nanoroughness layer of 5 to 15 nm height was deposited with GLAD angles of 82 and 86°

The microfluidic system for carrying out the detection in solution was developed using a patterned microfluidic multichannel in a 140 µm thick double-sided adhesive tape sheet (Mcs-foil-008, Microfluidic ChipShop GmbH, Germany). The proposed design integrates two sensing regions to allow multiplexed biodetection. A 2 mm tick patterned polymethyl methacrylate (PMMA) lid was added as a cover to facilitate the fluidic tubes' connection.

Chips were clamped to a custom-made optical platform for reflectance measurements. The chips were connected to a peristaltic pump with adjustable pumping speed, guaranteeing a constant liquid flow. Reflectance measurements were performed under TM-polarization of a compact stabilized broadband light source (SLS201L, Thorlabs, Germany) at a fixed angle of 40°. The incident excitation plane was perpendicularly aligned to the nanograting direction. The reflected light was collected and fiber-coupled to a compact Charge-Coupled Device (CCD) spectrometer (Exemplar UV-NIR, BWTek, Germany). Reflectivity spectra were acquired every 1 ms, and 50 consecutive spectra were measured and averaged to provide the final spectrum. These acquisition parameters were selected to obtain the optimum signal-to-noise (S/N) ratio without significantly increasing the data acquisition time. Changes in the resonance peak position (λSPR) were tracked via peak analysis using Origin 2018 software (OriginPro, OriginLab Co., Northampton, USA).

### References

Belushkin, Alexander, et al. "Rapid and digital detection of inflammatory biomarkers enabled by a novel portable nanoplasmonic imager." Small 16.3 (2020): 1906108.
Garoli, Denis, et al. "Nanoporous gold metamaterials for high sensitivity plasmonic sensing." Nanoscale Horizons 4.5 (2019): 1153-1157.
Lopez-Muñoz, Gerardo A., et al. "Plasmonic nanocrystals on polycarbonate substrates for direct and label-free biodetection of Interleukin-6 in bioengineered 3D skeletal muscles." Nanophotonics 10.18 (2021): 4477-4488.
López-Muñoz GA, Estévez MC, Vázquez-García M, Berenguel-Alonso M, Alonso-Chamarro J, Homs-Corbera A, Lechuga LM. Gold/silver/gold trilayer films on nanostructured polycarbonate substrates for direct and label-free nanoplasmonic biosensing. J Biophotonics 2018,11,e201800043. https://doi.org/10.1002/jbio.201800043
Lopez, Gerardo A., et al. "Recent advances in nanoplasmonic biosensors: applications and lab-on-a-chip integration." Nanophotonics 6.1 (2017): 123-136.
Spacková, Barbora, Maria Laura Ermini, and Jiří Homola. "High-performance biosensor exploiting a light guidance in sparse arrays of metal nanoparticles." Optics Letters 44.7 (2019): 1568-1571.
Sultanova N, Kasarova S, Nikolov I. Dispersion properties of optical polymers. Acta Phys Pol A 2009,116,585-587. https://doi.org/10.12693/APhysPolA.116.585
Wakaki M, Kudo K, Shibuya, T.Physical properties and data of optical materials 2007. Boca Raton (Fla.) : CRC press.
Xu Y, Bai P, Zhou X, Akimov Y, Png CE, Ang LK, Knoll W, Wu, L. Optical Refractive Index Sensors with Plasmonic and Photonic Structures: Promising and Inconvenient Truth. Adv Opt Mater 2019,7,31-33. https://doi.org/10.1002/adom.201801433

### CLAUSES

1. A plasmonic nanostructure biosensor comprising a substrate and a metal film disposed on the substrate, wherein said metal film is disposed on the substrate under two deposition conditions: one first layer is deposited with a thickness below the optimal plasmonic coupling, preferably under the normal incidence of evaporation flux, and a second layer is deposited using oblique angle deposition at a fixed deposition angle.
2. The plasmonic nanostructure biosensor of clause 1, wherein the substrate comprises or is made of silicon, silicon dioxide, silicon nitride, glass, diamond, quartz, magnesium fluoride (MgF2), calcium fluoride (CaF2), ZnSe, germanium, or a polymer.
3. The plasmonic nanostructure biosensor of any one of clauses 1 or 2, wherein the metal is a Noble metal, a transition metal, or an alkali metal.
4. The plasmonic nanostructure biosensor of any one of clauses 1 or 2, wherein the metal is gold.
5. The plasmonic nanostructure biosensor of any one of clauses 1 to 4, wherein the substrate is a 1-2D nanocrystal template (i.e., Blu-Ray discs 1-D nanocrystals).
6. The plasmonic nanostructure biosensor of any one of clauses 1 to 5, wherein the first layer has a thickness of less than 70 nm, and the thickness of the second layer is in the range of from 1 to 40 nm and wherein the total thickness of the first and second layers is in the range of from 65 nm to 100 nm, preferably from 65 nm to 80 nm.
7. The plasmonic nanostructure biosensor of clause 6, wherein the first layer has a thickness of from 40 to 65nm, preferably from 50 nm to 65 nm, more preferably about 60 nm, and the thickness of the second layer is in the range of from 1 to 30 nm, preferably from 1 to 20 nm, more preferably from 1 to 15 nm.
8. The plasmonic nanostructure biosensor of any one of clauses 6 or 7, wherein the total thickness of the first and second layers is in the range of from 65 nm to 80 nm.
9. The plasmonic nanostructure biosensor of clause 8, wherein the total thickness of the first and second layers is about 70 nm.
10. The plasmonic nanostructure biosensor of any one of clauses 1 to 6, wherein the metal disposed on the substrate is gold, the first layer has a thickness of from 40 to 65nm, preferably from 50 nm to 65 nm, more preferably about 60 nm, the thickness of the second layer is in the range of from 1 to 30 nm, preferably from 1 to 20 nm, more preferably from 1 to 15 nm, and the total thickness of the first and second layers is in the range of from 65 nm to 80 nm.
11. The plasmonic nanostructure biosensor of clause 10, wherein the total thickness of the first and second layers is about 70 nm.
12. The plasmonic nanostructure biosensor of any one of clauses 1 to 8, wherein said metal film further comprises a plurality of nanoelements arranged in a predefined pattern on top of the metal film, wherein each of said nanoelements has a dimension of less than 100 nm, preferably between 1 to 15 nm, more preferably between 5 and 10 nm.
13. A method for manufacturing a plasmonic nanostructure biosensor, wherein the plasmonic nanostructure comprises a substrate and a metal film disposed on the substrate, and wherein the method comprises disposing the metal film on the substrate under two deposition conditions:
   i. one first layer of the metal film is deposited on the substrate with a thickness below the optimal plasmonic coupling, preferably under the normal incidence of evaporation flux; and
   ii. a second layer is deposited using oblique angle deposition at a fixed deposition angle.
14. The method of clause 13, wherein the substrate comprises or is made of silicon, silicon dioxide, silicon nitride, glass, diamond, quartz, magnesium fluoride (MgF2), calcium fluoride (CaF2), ZnSe, germanium, or a polymer, preferably the substrate is a crystal or a nanocrystal.
15. The method of any one of clauses 13 or 14, wherein the metal film comprises or is made of a Noble metal, a transition metal, or an alkali metal, or any combination thereof, wherein preferably the metal is gold.
16. The method of any one of clauses 13 to 15, wherein the substrate is a 1-2D nanocrystal template (i.e., Blu-Ray discs 1-D nanocrystals).
17. The method of any one of claims 13 to 16, wherein the second layer is deposited using Glancing Angle Deposition and the metal is gold.
18. The method of any one of clauses 13 to 17, wherein the first layer has a thickness of less than 70 nm and the thickness of the second layer is in the range of from 1 to 40 nm.
19. The method of any one of clauses 13 to 17, wherein the first layer has a thickness of from 40 to 65nm, preferably from 50 nm to 65 nm, more preferably about 60 nm, and the thickness of the second layer is in the range of from 1 to 30 nm, preferably from 1 to 20 nm, more preferably from 1 to 15 nm.
20. The method of any one of clauses 18 to 19, wherein the total thickness of the first and second layers is in the range of from 65 nm to 100 nm, preferably from 65 nm to 80 nm.
21. The method of any one of clauses 18 to 19, wherein the total thickness of the first and second layers is about 70 nm.
22. The method of any one of clauses 13 to 21, wherein the metal disposed on the substrate is gold, the second layer is deposited using Glancing Angle Deposition, the first layer has a thickness of from 40 to 65nm, preferably from 50 nm to 65 nm, more preferably about 60 nm, and the thickness of the second layer is in the range of from 1 to 30 nm, preferably from 1 to 20 nm, more preferably from 1 to 15 nm, and wherein the total thickness of the first and second layers is in the range of from 65 nm to 80 nm, preferably about 70 nm.
23. The method of any one of clauses 13 to 22, wherein the second layer is deposited, preferably by using Glancing Angle Deposition, at a fixed deposition angle of less than 90º, preferably between 70º and 90º, more preferably between 80º and 90º.
24. The method of any one of clauses 13 to 23, wherein the metal film further comprises a plurality of nanoelements arranged in a predefined pattern on top of the metal film, wherein each of said nanoelements has a dimension of less than 100 nm, preferably between 1 to 15 nm, more preferably between 5 and 10 nm.
25. A plasmonic nanostructure biosensor obtained according to the method of any of clauses 13 to 24.
26. In vitro use of the plasmonic nanostructure according to any of clauses 1 to 12 or the plasmonic nanostructure according to claims 25, for detecting one or more biomolecular targets, wherein preferably the biorecognition event is below 100 nm, preferably between 10 to 15 nm.
27. A plasmonic nanostructure biosensor system for detecting one or more biomolecular targets, preferably comprising:
   a. a plasmonic nanostructure biosensor comprising a substrate and a metal film disposed on the substrate as defined in any of clauses 1 to 12 or as defined in clause 25, wherein said metal film comprises a plurality of nanoelements arranged in a predefined pattern, wherein each of said nanoelements has a dimension of less than 100 nm, preferably between 1 to 15 nm, more preferably between 5 and 10 nm;
   b. a device for contacting one or more samples comprising one or more biomolecular targets to the metal film surface(s) of the plasmonic nanostructure biosensor;
   c. an incident light source for illuminating a surface of said metal film to produce surface plasmons; and
   d. an optical detection system for collecting and measuring light displaced from said illuminated metal film, wherein said displaced light is indicative of surface plasmon resonance on one or more surfaces of said metal film.
28. The plasmonic nanostructure biosensor system of clause 27, wherein the device for contacting one or more samples comprises a fluidic system.
29. A method for detecting one or more biomolecular targets comprising:
   a. providing a plasmonic nanostructure biosensor system comprising:
      i. a plasmonic nanostructure biosensor comprising a substrate and a metal film disposed on the substrate as defined in any of clauses 1 to 12 or as defined in clause 25, wherein said metal film comprises a plurality of nanoelements arranged in a predefined pattern, wherein each of said nanoelements has a dimension of less than 100 nm, preferably between 1 to 15 nm, more preferably between 5 and 10 nm;
      ii. a device for contacting one or more samples comprising one or more biomolecular targets to the metal film surface(s) of the plasmonic nanostructure biosensor;
      iii. an incident light source for illuminating a surface of said metal film to produce said surface plasmons; and
      iv. an optical detection system for collecting and measuring light displaced from said illuminated metal film, wherein said displaced light is indicative of surface plasmon resonance on one or more surfaces of said metal film;
   b. contacting one or more samples comprising one or more biomolecular targets to the metal film surface of the plasmonic nanostructure biosensor;
   c. illuminating one or more surfaces of the metal film of the plasmonic nanostructure biosensor with the incident light source to produce surface plasmons, before and after the contacting with the one or more samples;
   d. collecting and measuring light displaced from the illuminated film with the optical detection system, before and after the contacting with the one or more samples; and
   e. detecting the one or more biomolecular targets based on a change or difference in the measurement of the light displaced from the illuminated film before and after the contacting with the one or more samples.
30. The method of clause 29, wherein the biomolecular target is a eukaryotic cell, a eukaryotic cellular component, a prokaryotic cell, a prokaryotic cellular component, a viral particle, a protein, an oligonucleotide, a prion, a toxin, or any combination thereof.
31. The method of any one of clauses 29 or 30, wherein said collected light comprises light in a transmission mode, in a reflection mode, or a combination thereof.
32. The method of any one of clauses 29 or 31, wherein the step of measuring displaced light comprises measuring light over a spectral range selected to comprise at least one plasmon band.
33. The method of any one of clauses 29 or 32, wherein the change in the measurement of the displaced light before and after the contacting is a resonance peak shift, a change in a resonance peak intensity, a broadening of a resonance peak, a distortion in resonance of peak, or a change in refractive index.

## Claims

1. A method for manufacturing a plasmonic nanostructure biosensor, wherein the plasmonic nanostructure comprises a substrate and a metal film disposed on the substrate, and wherein the method comprises disposing the metal film on the substrate under two deposition conditions:
i. one first layer of the metal film is deposited on the substrate with a thickness below the optimal plasmonic coupling, preferably under the normal incidence of evaporation flux; and
ii. a second layer is deposited using oblique angle deposition at a fixed deposition angle.

2. The method of claim 1, wherein the substrate comprises or is made of silicon, silicon dioxide, silicon nitride, glass, diamond, quartz, magnesium fluoride (MgF2), calcium fluoride (CaF2), ZnSe, germanium, or a polymer, preferably the substrate is a crystal or a nanocrystal.

3. The method of any one of claims 1 or 2, wherein the metal film comprises or is made of a Noble metal, a transition metal, or an alkali metal, or any combination thereof, wherein preferably the metal is gold.

4. The method of any one of claims 1 to 3, wherein the substrate is a 1-2D nanocrystal template (i.e., Blu-Ray discs 1-D nanocrystals).

5. The method of any one of claims 1 to 4, wherein the second layer is deposited using Glancing Angle Deposition and the metal is gold.

6. The method of any one of claims 1 to 5, wherein the first layer has a thickness of less than 70 nm and the thickness of the second layer is in the range of from 1 to 40 nm.

7. The method of any one of claims 1 to 6, wherein the first layer has a thickness of from 40 to 65nm, preferably from 50 nm to 65 nm, more preferably about 60 nm, and the thickness of the second layer is in the range of from 1 to 30 nm, preferably from 1 to 20 nm, more preferably from 1 to 15 nm.

8. The method of any one of claims 6 to 7, wherein the total thickness of the first and second layers is in the range of from 65 nm to 100 nm, preferably from 65 nm to 80 nm.

9. The method of any one of claims 6 to 7, wherein the total thickness of the first and second layers is about 70 nm.

10. The method of any one of claims 1 to 9, wherein the metal disposed on the substrate is gold, the second layer is deposited using Glancing Angle Deposition, the first layer has a thickness of from 40 to 65nm, preferably from 50 nm to 65 nm, more preferably about 60 nm, and the thickness of the second layer is in the range of from 1 to 30 nm, preferably from 1 to 20 nm, more preferably from 1 to 15 nm, and wherein the total thickness of the first and second layers is in the range of from 65 nm to 80 nm, preferably about 70 nm.

11. The method of any one of claims 1 to 10, wherein the second layer is deposited, preferably by using Glancing Angle Deposition, at a fixed deposition angle of less than 90º, preferably between 70º and 90º, more preferably between 80º and 90º.

12. The method of any one of claims 1 to 11, wherein the metal film further comprises a plurality of nanoelements arranged in a predefined pattern on top of the metal film, wherein each of said nanoelements has a dimension of less than 100 nm, preferably between 1 to 15 nm, more preferably between 5 and 10 nm.

13. A plasmonic nanostructure biosensor obtained according to the method of any of claims 1 to 12.

14. In vitro use of the plasmonic nanostructure according to claims 13, for detecting one or more biomolecular targets, wherein preferably the biorecognition event is below 100 nm, preferably between 10 to 15 nm.

15. A plasmonic nanostructure biosensor system for detecting one or more biomolecular targets, preferably comprising:
a. a plasmonic nanostructure biosensor comprising a substrate and a metal film disposed on the substrate as defined in claim 14, wherein said metal film comprises a plurality of nanoelements arranged in a predefined pattern, wherein each of said nanoelements has a dimension of less than 100 nm, preferably between 1 to 15 nm, more preferably between 5 and 10 nm;
b. a device for contacting one or more samples comprising one or more biomolecular targets to the metal film surface(s) of the plasmonic nanostructure biosensor;
c. an incident light source for illuminating a surface of said metal film to produce surface plasmons; and
d. an optical detection system for collecting and measuring light displaced from said illuminated metal film, wherein said displaced light is indicative of surface plasmon resonance on one or more surfaces of said metal film.
